# EUROPÄISCHE PATENTANMELDUNG

(11) **EP 4 166 390 A1**
(43) Veröffentlichungstag der Anmeldung: **19.04.2023**
(21) Anmeldenummer: 22201139.7
(22) Anmeldetag: 12.10.2022
(51) Int. Cl.: B60P 3/39, A47C 17/80

(54) **KASTENWAGEN MIT VERSTELLBARER SCHLAFGELEGENHEIT**

(30) Priorität: 13.10.2021 DE 102021126551
(71) Anmelder: Gotthardt, Michael, 39291 Möser (DE)
(72) Erfinder: Gotthardt, Michael, 39291 Möser (DE)
(74) Vertreter: Bittner, Bernhard

(57) **Zusammenfassung**

Bewegliche Wohneinrichtung (1), insbesondere Kastenwagen mit einem Aufenthaltsraum (10) und wenigstens einer innerhalb dieses Aufenthaltsraums (10) angeordneten Zubereitungseinheit (12) für Speisen und mit wenigstens einer innerhalb des Aufenthaltsraums angeordneten Liegeeinrichtung (2), wobei diese Liegeeinrichtung in einer vorgegebenen linearen Richtung zwischen einer Liegeposition, in welcher sie für einen Benutzer als Liegefläche dient und einer weiteren Position bewegbar ist, wobei die Liegeeinrichtung in der Liegeposition in einer vertikalen Richtung niedriger angeordnet ist als in der weiteren Position und wobei die Wohneinrichtung wenigstens eine Antriebseinrichtung aufweist, welche dazu geeignet und bestimmt ist die Liegeeinrichtung von der Liegeposition in die weitere Position zu bewegen, dadurch gekennzeichnet, dass die Liegeeinrichtung ein Gestell (22) und eine Matratze (24) aufweist, und wenigstens vier in der vertikalen Richtung bewegliche Halteeinrichtungen, an denen das Gestell in einer vertikalen Richtung beweglich angeordnet ist.

## Beschreibung

Die vorliegende Patentanmeldung betrifft den technischen Bereich von Wohnmobilen und vergleichbaren Fahrzeugen.

Die Erfindung wird unter Bezugnahme auf einen Kastenwagen beschrieben, es wäre jedoch auch möglich, dass die Erfindung auch in anderen bewegbaren Einheiten wie beispielsweise Booten, Wohnwagen, Camping-Fahrzeugen und dergleichen verwendet wird.

Aus dem Stand der Technik sind seit langem Fahrzeuge wie etwa Wohnmobile bekannt, welche eine Innenausstattung aufweisen, welche ein zumindest kurzfristiges Wohnen innerhalb des Fahrzeugs ermöglichen. Zu diesen Ausstattungsmerkmalen gehört üblicherweise neben Küchen- oder Kocheinrichtungen auch eine Schlafgelegenheit.

Die Erfindung eignet sich insbesondere für sog. Kastenwägen, da diese einen auch im Vergleich zu Wohnmobilen deutlich reduzierten Innenraum aufweisen.

Gerade die Schlafgelegenheit ist jedoch mit größeren Problemen verbunden, insbesondere da sie naturgemäß ein hohes Maß an Platz beansprucht. Aus dem Stand der Technik sind unterschiedliche Vorgehensweisen bekannt, um derartige Schlafanordnungen anzuordnen wie beispielsweise faltbare Schlafanordnungen, schwenk- oder kippbare Schlafanordnungen und dergleichen. All diese Möglichkeiten gehen jedoch jeweils mit einem erheblichen Platzbedarf einher.

Der vorliegenden Erfindung liegt daher die Aufgabe zugrunde, einen Platzbedarf für derartige Schlafstätten, insbesondere innerhalb von Kastenwägen und dergleichen zu verringern. Dies wird erfindungsgemäß durch die Gegenstände der unabhängigeren Patenansprüche erreicht. Vorteilhafte Ausführungsformen und Weiterbildungen sind Gegenstand der Unteransprüche.

Die vorliegende Erfindung betrifft daher eine bewegliche Wohneinrichtung, insbesondere einen Kastenwagen mit einem Aufenthaltsraum und wenigstens einer innerhalb dieses Aufenthaltsraums angeordneten Zubereitungseinheit für Speisen und mit wenigstens einer innerhalb des Aufenthaltsraums angeordneten Liegeeinrichtung, wobei diese Liegeeinrichtung in einer vorgegebenen linearen Richtung zwischen einer Liegeposition, in welcher sie für einen Benutzer als Liegefläche dient und einer weiteren Position (insbesondere einer nichtgebrauchs-Position) bewegbar ist, wobei die Liegeeinrichtung in der Liegeposition in einer vertikalen Richtung niedriger angeordnet ist als in der weiteren Position und wobei die Wohneinrichtung wenigstens eine Antriebseinrichtung aufweist, welche dazu geeignet und bestimmt ist die Liegeeinrichtung von der Liegeposition in die weitere Position zu bewegen.

Erfindungsgemäß weist die Liegeeinrichtung ein Gestell und eine Matratze auf, und wenigstens vier in der vertikalen Richtung bewegliche Halteeinrichtungen, an denen das Gestell angeordnet ist.

Wie erwähnt, handelt es sich bei der beweglichen Einrichtung insbesondere um einen Kastenwagen oder ein vergleichbares Fahrzeug. Kastenwägen haben im Vergleich zu Wohnmobilen einen deutlich verringerten Innenraum. Der Vorteil derartiger Kastenwägen besteht darin, dass üblicherweise auf gewöhnlichen PKW - Parkplätzen abstellbar sind und nicht auf Sonderflächen angewiesen sind. Aus diesem Grunde können sie gerade auch zu Reisezwecken wesentlich vielseitiger eingesetzt werden als Wohn- oder Campingmobile.

Bevorzugt weist die bewegliche Wohneinrichtung eine (Außen)-Breite auf, die kleiner ist als 3,00m, bevorzugt kleiner als 2,50m, bevorzugt kleiner als 2,40m, bevorzugt kleiner als 2,30m, bevorzugt kleiner als 2,20m und besonders bevorzugt kleiner als 2,10m. Bei einer weiteren bevorzugten Ausführungsform weist die bewegliche Wohneinrichtung eine (Außen)-Breite auf, die größer ist als 1,50m, bevorzugt größer als 1,60m, bevorzugt größer als 1,70m und besonders bevorzugt größer als 1,80m und besonders bevorzugt größer als 1,90m.

Bevorzugt weist die mobile Wohneinrichtung eine (Innen)höhe auf, die größer ist als 1,50m, bevorzugt größer als 1,60m, bevorzugt größer als 1,70m und besonders bevorzugt größer als 1,80m. Bei einer weiteren bevorzugten Ausführungsform weist die mobile Wohneinrichtung eine (Innen)höhe auf, die kleiner ist als 2,30m, bevorzugt kleiner als 2,20m, bevorzugt kleiner als 2,10m und besonders bevorzugt kleiner als 2,00m.

Bevorzugt dienen diese Führungseinrichtungen dazu, die Liegeeinrichtung innerhalb des Wohnraums in der besagten vertikalen Richtung zu bewegen.

Besonders bevorzugt enthält die bewegliche Wohneinrichtung weiterhin eine Toiletteneinrichtung.

Weiterhin weist die Wohneinrichtung bevorzugt einen Flüssigkeits- und insbesondere Wassertank auf und auch bevorzugt eine Wasserversorgung. Besonders bevorzugt weist die Wohneinrichtung auch bevorzugt eine elektrische Versorgung auf.

Bei einer weiteren bevorzugten Ausführungsform kann die Liegeeinrichtung zwischen den genannten Positionen um wenigstens 10 cm, bevorzugt wenigstens 20 cm, bevorzugt wenigstens 30 cm, bevorzugt wenigstens 40 cm, bevorzugt wenigstens 50 cm, bevorzugt wenigstens 60 cm, bevorzugt wenigstens 70 cm und bevorzugt wenigstens 80 cm bewegt und insbesondere angehoben und/oder abgesenkt werden.

Bei einer weiteren bevorzugten Ausführungsform ist die Liegeeinrichtung und insbesondere die Matratze in der weiteren Position nahe und/oder an einem Deckenbereich des Fahrzeugs angeordnet. Dabei ist es auch möglich, dass die Matratze geringfügig an den Dachhimmel des Fahrzeugs angedrückt wird.

Bei einer weiteren bevorzugten Ausführungsform weist das Gestell vier Eckbereiche auf, und diese Eckbereiche bilden ein Rechteck aus, wobei bevorzugt die vier Führungseinrichtungen an diesen Eckbereichen angeordnet sind.

Dies bedeutet, dass das Gestell an den besagten Eckbereichen geführt ist und so bewegt werden kann.

Dabei ist es, wie untenstehend genauer erwähnt, möglich, dass die Antriebseinrichtung an einer dieser Führungseinrichtungen angeordnet ist, es wäre jedoch auch möglich, dass mehrere Antriebseinrichtungen an mehreren Führungseinrichtungen vorgesehen sind.

Bei einer weiteren bevorzugten Ausführungsform ist an wenigstens zwei der Führungseinrichtungen eine Antriebseinrichtung zum Bewegen des Gestells angeordnet. Besonders bevorzugt ist an wenigstens drei und besonders bevorzugt an allen vier Führungseinrichtungen eine entsprechende Antriebseinrichtung angeordnet.

Bevorzugt weist wenigstens eine Antriebseinrichtung und weisen bevorzugt mehrere Antriebseinrichtungen einen Linearmotor auf. Es wären jedoch auch andere Antriebe möglich, welche Linearbewegungen erzeugen wie beispielsweise Spindelantriebe oder auch Antriebe mit Seilzügen. Besonders bevorzugt sind mehrere Antriebseinrichtungen vorgesehen und diese sind besonders bevorzugt aufeinander synchronisiert, sodass sie eine gleichartige Bewegung an allen Eckbereichen, bzw. aller Eckbereiche der Liegeeinrichtung erzeugen.

Dabei ist es möglich und bevorzugt, dass wenigstens eine und bevorzugt mehrere der Antriebseinrichtungen und/oder Führungseinrichtungen an dem Fahrzeugdach (innenseitig) befestigt sind.

Auf diese Weise kann die Liegeeinrichtung gleichmäßig gehoben und/oder gesenkt werden.

Bei einer weiteren bevorzugten Ausführungsform weist die Wohneinrichtung wenigstens eine Abstützeinrichtung auf, welche das Gestell und/oder die Liegeeinrichtung in der Liegeposition abstützt. Dies bedeutet, dass insbesondere die Liegeeinrichtung und/oder das Gestell auf diese Abstützeinrichtung abgesenkt werden kann und von dieser dann gehalten werden kann.

Dabei ist bevorzugt diese Abstützeinrichtung ein Bestandteil einer weiteren Inneneinrichtung der Wohneinrichtung wie etwa einer Toiletteneinrichtung oder einer Kücheneinrichtung oder aber eines Schranks.

Bevorzugt ist die Abstützeinrichtung in der vertikalen Richtung unflexibel und/oder hart, gibt also in dieser Richtung unter dem Gewicht des Gestells und/oder der Matratze nicht oder nicht wesentlich nach. Damit wird bei dieser Ausgestaltung das Gestell und/oder die Matratze nicht auf einer weichen bzw. nachgiebigen Unterlage abgestützt, wie etwa einem Polster oder einer weiteren weichen Matratze, sondern bewusst auf einem harten Untergrund, der das Gestell stabil halten kann.

Auf diese Weise müssen die Antriebseinrichtungen bzw. Motoren zwar die Kraft zum Heben und Senken der (unbesetzten) Liegeeinrichtung aufbringen, nicht jedoch eine Stützkraft, da diese von der Abstützeinrichtung übernommen wird. Insbesondere ist diese Abstützeinrichtung dabei auch geeignet und bestimmt, das Gewicht der Liegeeinrichtung selbst sowie ggf. auch von ein bis drei Personen zu tragen.

Bei einer weiteren vorteilhaften Ausführungsform ist an einer Unterseite des Gestells wenigstens ein Schonelement und sind bevorzugt mehrere Schonelemente angeordnet, welche bei einem Aufliegen des Gestells auf der Abstützeinrichtung diese schonen und insbesondere vor mechanischer Abnutzung schonen.

Wie oben erwähnt, liegt das Gestell in einer bevorzugten Ausführungsform das Gestell auf der Abstützeinrichtung auf. Damit kommt es an den mechanischen Kontaktstellen zwischen dem Gestell und der Abstützeinrichtung zu erheblichen auf die Abstützeinrichtung wirkenden Kräften. Diese können an der Abstützeinrichtung für deutliche mechanische Schäden sorgen, insbesondere auch, wenn sich das Bettgestell während der Benutzung (geringfügig) bewegt.

Es wird daher vorgeschlagen, an der Unterseite Schonelemente anzubringen. Hierbei kann es sich beispielsweise um Auflageelemente wie etwa Füßchen handeln, welche an ihrer der Abstützeinrichtung zugewandte Oberfläche aus einem Weichen Material wie etwa Hartgummi ausgebildet sind.

Bei einer weiteren vorteilhaften Ausführungsform erlauben diese Federelemente eine geringfügig schwimmende Abstützung des Gestells gegenüber der Abstützeinrichtungen. So können diese Schonelemente etwa eine schwimmende Lagerung eines Abschnitts gegenüber einem anderen Abschnitt aufweisen. Bevorzugt wird eine schwimmende Bewegung in einer zu der vertikalen Richtung senkrecht stehenden Ebene zugelassen. Dabei wird bevorzugt in dieser Ebene eine Bewegung um wenigstens 1mm, bevorzugt wenigstens 2mm und besonders bevorzugt wenigstens 3mm zugelassen. Bevorzugt wird eine schwimmende Bewegung um weniger als 5cm, bevorzugt weniger als 3cm, bevorzugt weniger als 2cm zugelassen.

Bevorzugt weisen die Schonelemente ein Federelement auf, welches ein Federn der Schonelemente in der vertikalen Richtung ermöglicht. Auf diese Weise wird ein geringes Federn des Gestells gegenüber der Abstützeinrichtung ermöglicht.

Auf diese Weise führen auch geringe Bewegungen des Gestells in der Schlafposition, etwa beim Schlafengehen nicht zu mechanischen Beschädigungen.

Bei einer weiteren bevorzugten Ausführungsform ist wenigstens eines der besagten Schonelemente und sind bevorzugt mehrere der Schonelemente von dem Gestell demontierbar.

Bei einer weiteren bevorzugten Ausführungsform weist die Abstützeinrichtung Abstützbereiche und/oder Abstützelemente zum Abstützen des Gestells auf. Diese können dabei aus speziellen abriebfesten Materialien bestehen.

Die Abstützeinrichtung kann auch spezielle Oberflächen aufweisen, auf denen sich das Gestell abstützt, insbesondere aus hartem Material. Dabei ist es möglich, dass diese Oberflächen als austauschbare Elemente ausgebildet sind.

Bevorzugt ist damit die Abstützeinrichtung dazu geeignet und bestimmt, Gewichtskräfte von mehr als 50 kg, bevorzugt mehr als 80 kg und besonders bevorzugt mehr als 100 kg zu tragen.

Bevorzugt weist die Wohneinrichtung mehrere Abstützeinrichtungen auf, welche jeweils unterschiedliche Bereiche des Gestells abstützen. Bevorzugt sind diese Abstützeinrichtungen voneinander in einer Breitenrichtung der Wohneinrichtung beabstandet bzw. zwischen den Abstützeinrichtungen ist ein Zwischenraum ausgebildet.

Bei einer weiteren bevorzugten Ausführungsform stützt die oder eine Abstützeinrichtung die Liegeeinrichtung an einer Längskante des Gestells ab. Auf diese Weise ist einerseits eine besonders günstige Gewichtsverteilung möglich und andererseits kann die Abstützeinrichtung derart gestaltet werden, dass sie den Wohnraum des Fahrzeugs nur geringfügig stört.

So wäre es beispielsweise möglich, dass auf der rechten und linken Seite des Wohnraums auch mehrere Abstützeinrichtungen geschaffen werden, die besonders bevorzugt auf der gleichen Höhe angeordnet sind, sodass die Liegeeinrichtung eben abgestützt werden kann.

Bei einer weiteren besonders bevorzugten Ausführungsform weist die Abstützeinrichtung ein Abstützelement auf, welches zwischen einer ersten Position, in welcher es zum Abstützen des Gestells geeignet und bestimmt ist und einer zweiten Position, in welcher es nicht zum Abstützen des Gestells geeignet und bestimmt ist, bewegbar ist. So kann beispielsweise die Abstützeinrichtung geklappt werden, sodass in einem Zustand des Fahrzeugs die Liegeeinrichtung abgestützt werden kann und in einem anderen dieses Abstützelement beispielsweise Wohnraumsparend in Richtung einer Wandung des Fahrzeugs geklappt werden kann.

Weiterhin ist es möglich, dass das Abstützelement bzw. die Abstützeinrichtung gegenüber einem Boden des Wohnraums abgestützt ist, oder aber, dass die Abstützeinrichtung an einem seitlichen Träger des Fahrzeugs angeordnet ist.

Bei einer weiteren bevorzugten Ausführungsform weist die Wohneinrichtung wenigstens zwei Abstützeinrichtungen auf, die jeweils zum Abstützen von Längskantenbereichen der Liegeeinrichtung dienen.

Weiterhin ist es möglich, dass das oben besagte Abstützelement schwenkbar, drehbar oder ausziehbar an einer Halterung angeordnet ist, um auf diese Weise in die Abstützposition gebracht werden zu können.

Bei einer weiteren bevorzugten Ausführungsform weist die Antriebseinrichtung wenigstens einen Elektromotor auf. Bevorzugt weist die Antriebseinrichtung wenigstens zwei, bevorzugt wenigstens drei und bevorzugt wenigstens vier Elektromotoren auf.

Bei einer weiteren vorteilhaften Ausführungsform ist das Gestell aus einem Material gefertigt, welches aus einer Gruppe von Materialien ausgewählt ist, welche Kunststoff, Aluminium, Eisen, Stahl und dergleichen enthält.

Bei einer weiteren bevorzugten Ausführungsform ist an dem Gestell wenigstens eine Beleuchtungseinrichtung angeordnet. Besonders bevorzugt ist diese Beleuchtungseinrichtung an einer Unterseite des Gestells angeordnet und besonders bevorzugt derart, dass die Beleuchtungseinrichtung Licht nach unten abstrahlt. Auf diese Weise kann in einer nicht Gebrauchs - Stellung der Liegeeinrichtung eine Deckenbeleuchtung zur Verfügung gestellt werden.

Bei einer weiteren bevorzugten Ausführungsform weist die Führungseinrichtung eine Teleskopartige Führungseinrichtung auf. Diese Führungseinrichtung kann dabei beispielsweise aus Flachstahl bestehen. Das Gestell kann ebenfalls bevorzugt aus Flachstahl (z. B. 70x10 mm bestehen).

Die Liegeeinrichtung und insbesondere das Gestell können, wie oben erwähnt, beispielsweise in massiver Weise und/oder aus Aluminium ausgeführt sein. Bei der Matratze kann es sich beispielsweise um Federkernelemente handeln. Dabei ist es möglich, dass die Matratze eine Höhe aufweist, die zwischen 10 cm und 40 cm, bevorzugt zwischen 15 cm und 30 cm und besonders bevorzugt bei etwa 20 cm liegt. Bevorzugt ist die hier beschriebene Innenraumeinrichtung für alle gängigen Wohnmobile und/oder Kastenwägen aber auch für teilintegrierte oder vollintegrierte Karavane geeignet. Neben den oben beschriebenen Linearmotoren können auch Gurtaufzüge vorgesehen sein, welche eine Bewegung der Liegeeinrichtung ermöglichen.

Bei einer weiteren bevorzugten Ausführungsform weist die Matratze vier Eckbereiche auf, welche ein Rechteck ausbilden, wobei die Matratze eine Oberseite aufweist, welche als Liegefläche dient, sowie eine Unterseite, welche dieser Oberseite gegenüber liegt und wobei die Matratze eine Ausnehmung aufweist, welche von der Oberseite zu der Unterseite reicht.

Bei einer weiteren bevorzugten Ausführungsform weist die Matratze wenigstens fünf oder sechs Eckbereiche auf, welche insbesondere ein unregelmäßiges Fünfeck oder Sechseck ausbilden, welches geometrisch durch Beschneiden eines Rechtecks in einem Eckbereich entsteht. So kann aus dem Rechteck beispielsweise ein kleineres Rechteck oder ein Dreieck ausgeschnitten werden. Daneben können auch gekrümmte Bereiche an dem besagten Rand ausgeschnitten werden.

Bei der ersten Variante ist nur eine Matratze vorgesehen, welche die besagte Ausnehmung ausbildet, bei der zweiten Variante sind zwei Matratzen vorgesehen, welche bevorzugt mit den beiden abgeschnittenen Bereichen aneinander liegen, so dass sich auf diese Weise die Ausnehmung ergibt.

Es wird damit eine vergleichsweise ungewöhnliche Matratze oder eine ungewöhnliche Zusammenstellung aus zwei Matratzen vorgeschlagen, welche eine Aussparung oder dergleichen aufweist. Derartige Wohnmobile weisen üblicherweise Dachluken oder Dachfenster auf. In einem angehobenen Zustand, in dem die Liegeeinrichtung nicht benutzt wird, soll nach Möglichkeit dieses Dachfenster oder diese Dachluke frei bleiben. Zu diesem Zweck dient die genannte Aussparung oder Ausnehmung in der Matratze.

Bevorzugt ermöglich die Ausnehmung einen erleichterten Einstieg in das Bett bzw. auf die Matratze. Bevorzugt weist die Ausnehmung eine Breite auf, die größer ist als der Querschnitt der Beine des Benutzers.

Bevorzugt weist die Wohneinrichtung ein Dachfenster auf und das Gestell und/oder die Matratze sind derart ausgebildet, dass dieses Dachfenster in keiner Position der Liegeeinrichtung durch das Gestell und/oder die Matratze vollständig verdeckt ist. Bevorzugt ist dieses Dachfenster zu weniger als 80%, bevorzugt zu weniger als 70%, bevorzugt zu weniger als 60%, bevorzugt zu weniger als 50%, bevorzugt zu weniger als 40% und besonders bevorzugt zu weniger als 30% verdeckt.

Auf diese Weise wird die Beleuchtung des Innenraums der Wohneinrichtung durch das Tageslicht nicht oder nur wenig durch die Matratze behindert.

Bei einer weiteren bevorzugten Ausführungsform ist auch das Gestell an diese Ausnehmung angepasst. So kann das Gestell ebenfalls eine entsprechende Ausnehmung aufweisen. Dabei ist es jedoch auch möglich, dass das Gestell an einer Kante und insbesondere an einer Querkante faltbar oder klappbar ist, um so eine Ausnehmung zu erzeugen. Zusätzlich oder alternativ kann das Gestell auch schiebbar oder eindrehbar und/oder wegdrehbar sein, um die Ausnehmung zu erzeugen und/oder zu schließen.

Bei einer weiteren bevorzugten Ausführungsform ist eine Anordnung aus zwei Gestellen vorgesehen, welche bevorzugt abgeschrägt sind.

Weiterhin ist es auch möglich, dass das Gestell ein ausziehbares Modul aufweist, welches die Ausnehmung wenigstens teilweise ausfüllt. Auf diese Weise kann insbesondere eine Zugänglichkeit von Dachluken oder Dachfenstern des Fahrzeugs beispielsweise Wohnmobils erreicht und/oder beibehalten werden. Auch kann bei dieser Ausgestaltung ein Dachfenster oder eine Dachluke unabhängig von der Position der Liegeeinrichtung geöffnet und/oder geschlossen werden.

Weiterhin wäre es auch möglich, dass das Gestell auf die Matratze angepasst ist und eine entsprechende Ausnehmung aufweist. Weiterhin ist es möglich, dass das Gestell unterhalb der Matratze netzartig ausgebildet ist, oder dass das Gestell in diesem Bereich eine Gitterstruktur aufweist.

Bei einer weiteren bevorzugten Ausführungsform sind die Eckbereiche der Matratze durch Kanten miteinander verbunden, wobei bevorzugt wenigstens eine dieser Kanten und insbesondere eine Querkante auch durch die Ausnehmung verbunden ist. Dies bedeutet, dass sich die Ausnehmung der Matratze auch bis zum Rand insbesondere einen (Quer-) Seitenrand der Matratze erstreckt.

Bei einer weiteren bevorzugten Ausführungsform ist ein Abdeckelement vorgesehen, welches zwischen einer ersten Position und einer zweiten Position bewegbar und insbesondere schwenkbar ist, wobei bevorzugt in der ersten Position die oben erwähnte Ausnehmung wenigstens teilweise und bevorzugt vollständig abgedeckt ist und in der zweiten Position die besagte Ausnehmung wenigstens teilweise freigegeben wird.

Auf diese Weise ist ein der zweiten Position, insbesondere in einer Nichtgebrauchsstellung der Matratze ein Dachfenster des Fahrzeugs freigegeben. In der ersten Position ist die Ausnehmung der Matratze wenigstens teilweise abgedeckt.

Bevorzugt ist das Abdeckelement bezüglich einer Schwenkachse schwenkbar, die senkrecht zu der Liegefläche der Matratze verläuft. Bei einer bevorzugten Ausführungsform ist an dem Gestell eine Schwenkwelle angeordnet, um das Abdeckelement zu schwenken.

Dabei ist bevorzugt das Abdeckelement in einem Einbauzustand zwischen dem Gestell und der Matratze angeordnet. Bei einer bevorzugten Ausführungsform weist das Abdeckelement eine größere Fläche auf als die oben beschriebene Ausnehmung. Bei einer bevorzugten Ausführungsform weist das Abdeckelement Eingriffselemente auf, welche ein Schwenken des Abdeckelements in einem Einbauzustand ermöglichen.

Bei einer weiteren bevorzugten Ausführungsform wird das Abdeckelement unabhängig von seiner Schwenkstellung wenigstens abschnittsweise durch das Gestell abgestützt.

Die vorliegende Erfindung ist weiterhin auf eine Matratze, insbesondere für Wohnmobile und dergleichen gerichtet, wobei die Matratze vier Eckbereiche aufweist, welche ein Rechteck ausbilden und wobei die Matratze eine Oberseite aufweist, welche als Liegefläche dient, sowie eine Unterseite, welche dieser Oberseite gegenüber liegt, wobei die Matratze eine Ausnehmung aufweist, welche von der Oberseite zu der Unterseite reicht.

Erfindungsgemäß sind die Eckbereiche durch Kanten verbunden und wenigstens eine dieser Kanten ist durch die Ausnehmung unterbrochen.

Es wird daher auch eine Matratze vorgeschlagen, in welcher eine Ausnehmung ausgebildet ist. Diese Ausnehmung dient, wie oben erwähnt insbesondere zum Freihalten eines Dachfensters oder einer Dachluke eines Wohnmobils, in welches diese Matratze eingebaut und/oder in welcher diese Matratze verwendet wird. Daneben dient die Ausnehmung bevorzugt auch zum Erhalt der vollen Stehhöhe in dem notwendigen Aktionsbereich innerhalb des Fahrzeugs.

Bei einer bevorzugten Ausführungsform weist die Matratze gegenüber der geometrischen Fläche eines Rechtecks (mit den gleichen Eckbereichen) einen Flächenanteil auf, der größer ist als 60 %, bevorzugt größer als 70 %, bevorzugt größer als 75 %, bevorzugt größer als 80 %.

Bevorzugt handelt es sich bei der unterbrochenen Kante um eine Querkante der Matratze.

Bei einer weiteren bevorzugten Ausführungsform weist die Ausnehmung ein sich in Richtung der Kante erweiterndes Profil auf. So kann beispielsweise die Ausnehmung ein V-förmiges oder U-förmiges Profil aufweisen, welches sich nach außen und das heißt zur Kante hin erweitert.

Besonders bevorzugt ist die Ausnehmung in der Längsrichtung der Matratze innerhalb einer Hälfte der Matratze, innerhalb von 40 % der Matratze, innerhalb von 35 % und innerhalb von 30 % der Matratze ausgebildet. Dies bedeutet, dass auch in Längsrichtung der Matratze ein großer Bereich der Matratze noch frei von der Ausnehmung ist. Dabei handelt es sich insbesondere um denjenigen Bereich, der bei der Benutzung den Oberkörperbereich eines Benutzers trägt.

Bei einer weiteren bevorzugten Ausführungsform ist die Ausnehmung in der Matratze zentral (bzgl. der Längskanten) ausgebildet. Dabei ist es möglich, dass die Ausnehmung symmetrisch bezüglich einer Mittelsenkrechten der Matratze ausgebildet ist. Besonders bevorzugt weist die Matratze einen Federkern, beispielsweise Froli-Federkern-Elemente auf. Diese können dabei eine Gesamthöhe aufweisen, die zwischen 3 und 15 cm, bevorzugt zwischen 4 und 12 cm, bevorzugt zwischen 5 und 10 cm und besonders bevorzugt bei ca. 7 cm liegt. Daneben oder zusätzlich kann auch eine Kaltschaummatratze vorgesehen sein. Diese kann dabei beispielsweise eine Höhe zwischen 5 und 18 cm, bevorzugt zwischen 7 und 16 cm, bevorzugt zwischen 9 und 15 cm und besonders bevorzugt ca. 12 cm Höhe aufweisen.

Bevorzugt ist daher die Matratze aus wenigstens zwei Komponenten ausgebildet.

Besonders bevorzugt sind die oben erwähnten Führungseinrichtungen an der Matratze und/oder an dem Gestell in den Eckbereichen angeordnet. Besonders bevorzugt sind jedoch die Führungseinrichtungen an einem Bereich der Längskanten des Gestells und insbesondere in dem Eckbereich angeordnet. Dabei ist es möglich, dass die Führungseinrichtungen von dem Eck selbst noch einen gewissen Abstand haben, beispielsweise einen Abstand der größer ist als 2 cm, bevorzugt größer als 5 cm und bevorzugt größer als 10 cm.

Bevorzugt haben jedoch die Führungseinrichtungen von den Eckbereich einen Abstand, der geringer ist als 50 cm, bevorzugt geringer als 40 cm, bevorzugt geringer als 30 cm und bevorzugt geringer als 20 cm.

Bevorzugt ist das Gestell als massiver Stahl- oder Alublechramen in der oben beschriebenen Y-Form verbindungssteif ausgelegt und besonders bevorzugt innerhalb mit "Froli-Bett-Federkernelementen" ausgelegt. Auf diesen Bett-Federkernelementen kann eine wie oben erwähnte 12 cm starke Kaltschaummatratze aufgebracht sein.

Weitere Vorteile und Ausführungsformen ergeben sich aus den beigefügten Zeichnungen:
Darin zeigen:
- Fig. 1: eine Darstellung einer mobilen Wohneinrichtung;
- Fig. 2: eine Darstellung einer Wohneinrichtung mit skizzierter Inneneinrichtung;
- Fig. 3: eine Darstellung einer Wohneinrichtung mit skizzierter Inneneinrichtung;
- Fig. 4: eine Darstellung des Innenraums einer Wohneinrichtung;
- Fig. 5: eine Darstellung eines leeren Innenraums mit skizzierter Inneneinrichtung;
- Fig. 6: eine Darstellung eines Innenraums mit Liegeeinrichtung;
- Fig. 7a - c: drei Darstellungen von erfindungsgemäßen Fahrzeugen; und
- Fig. 8a, b: zwei Darstellungen eines Abdeckelements

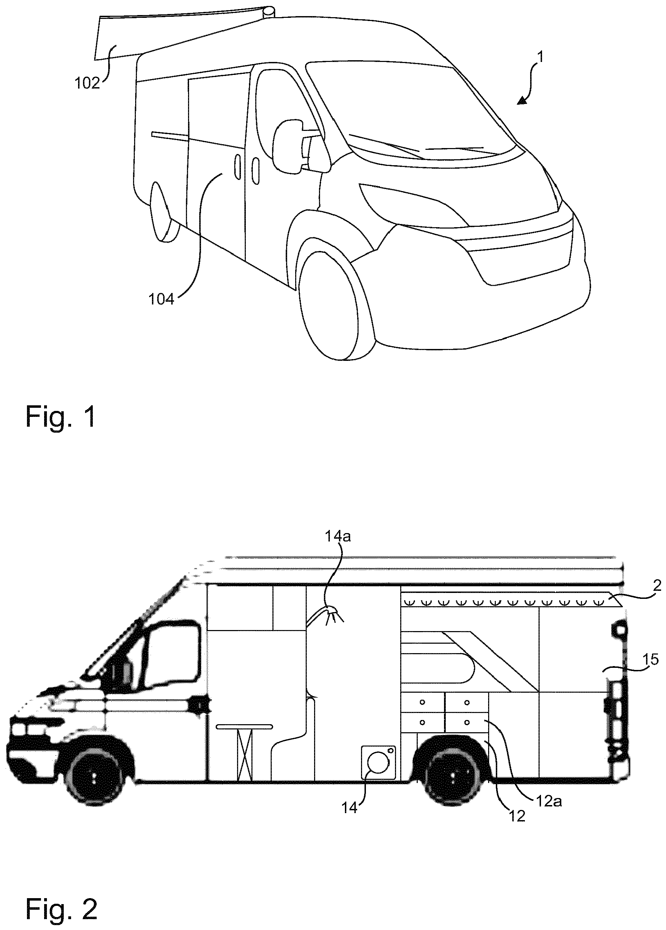

Fig. 1 zeigt eine Darstellung einer erfindungsgemäßen mobilen Wohneinrichtung 1. Diese weist hier eine aufklappbare Dachanordnung und eine Seitentür, beispielsweise in Form einer Schiebetüre auf.

Fig. 2 zeigt eine Seitenansicht einer erfindungsgemäßen Wohneinrichtung, wobei auch die Innenausstattung skizziert ist. Dabei ist eine Liegeeinrichtung 2 gezeigt, die sich hier in einer oberen Stellung, d.h. einer Nichtgebrauchsstellung befindet. Weiterhin ist eine Kücheneinrichtung 12 bzw. eine Zubereitungseinheit für Speisen dargestellt. Diese Zubereitungseinheit für Speisen ist hier in der vertikalen Richtung der Liegeeinrichtung unterhalb derselben angeordnet und kann daher in einer Schlafposition nicht oder nur eingeschränkt verwendet werden. Das Bezugszeichen 12a kennzeichnet Stauräume wie Schrankelemente der Kücheneinrichtung.

Das Bezugszeichen 14 bezieht sich auf eine Toiletteneinheit mit einer Duscheinrichtung 14a. Diese ist hier außerhalb des Bereiches der Liegeeinrichtung 2 angeordnet und kann daher bevorzugt unabhängig von der Position der Liegeeinrichtung verwendet werden.

Das Bezugszeichen 15 bezieht sich auf einen Stauraum, in dem beispielsweise Fahrräder oder Skier untergebracht werden können.

Man erkennt, dass das Fahrzeug hier eine Höhe von 195cm aufweist. Die Liegeeinrichtung ist in der Höhenrichtung zwischen einer oberen Höhe von 190cm und einer unteren Höhe von 110cm bewegbar.

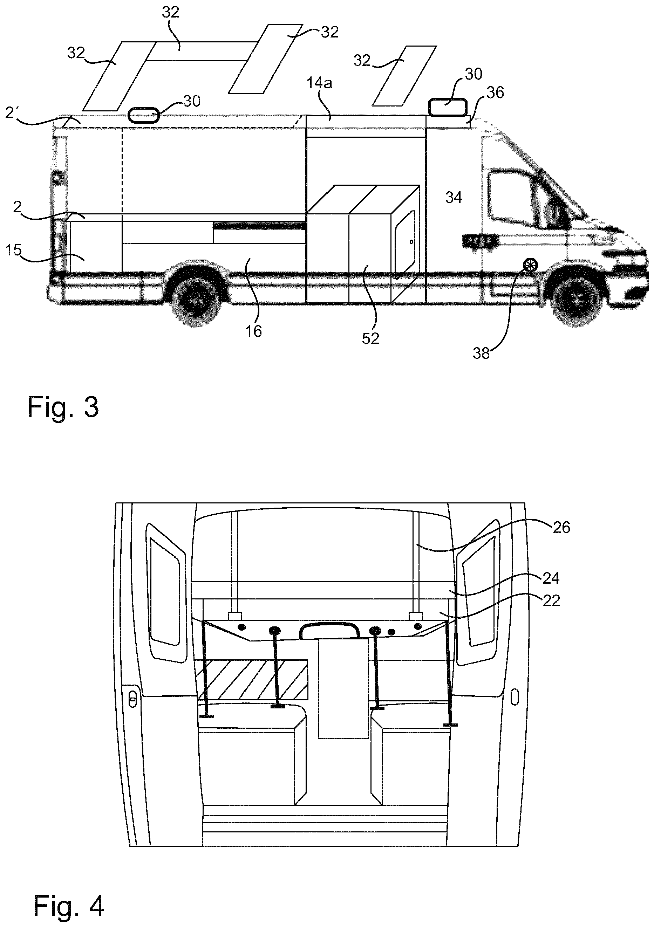

Fig. 3 zeigt eine weitere Ausgestaltung einer erfindungsgemäßen Wohneinrichtung. Diese weist auf dem Dach mehrere Solarpanele 32 zur Energieerzeugung auf. Diese können dabei um ein (schematisch dargestelltes) Dachfenster herum angeordnet sein. Das Bezugszeichen 2 kennzeichnet wieder die Liegeeinrichtung in einer Gebrauchsstellung und das Bezugszeichen 2' in einer Nichtgebrauchsstellung bzw. einer oberen Stellung. Das Bezugszeichen 36 kennzeichnet eine Steuerungseinrichtung zur Steuerung von Komponenten der Wohneinrichtung und das Bezugszeichen 38 eine Energiespeichereinrichtung wie etwa eine Lithiumbatterie. Diese kann beispielsweise auch von den Solarpanelen 32 gespeist werden.

Das Bezugszeichen 16 kennzeichnet einen Wassertank, der unterhalb der Liegeeinrichtung verbaut ist. Das Bezugszeichen 52 kennzeichnet einen oder mehrere Schränke, die hier außerhalb des Bereichs der Liegeeinrichtung 2 angeordnet sind. Daneben ist auch wieder die Duscheinrichtung 14a dargestellt.

In Fig. 4 ist die Liegeeinrichtung 2 genauer dargestellt. Diese weist ein Gestell 22 auf, auf dem eine Matratze 24 angeordnet ist. Das Bezugszeichen 26 kennzeichnet grob eine der Führungseinrichtungen, mit der die vertikale Bewegung der Liegeeinrichtung durchführbar ist. Diese Führungseinrichtungen greifen daher in einem Eckenbereich des Gestells jedoch nicht ganz an den Ecken an.

Man erkennt hier wiederum dass die Zubereitungseinheit 12 für Speisen unterhalb der Liegeeinrichtung 2 angeordnet ist.

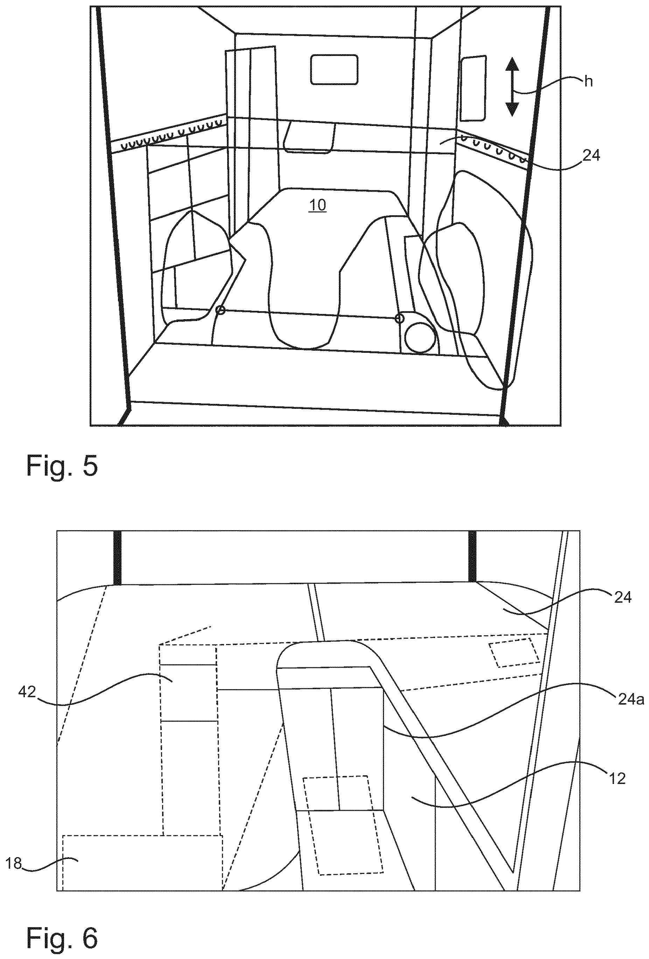

Fig. 5 zeigt eine grob schematische Darstellung des Aufenthaltsraums 10 der Wohneinrichtung. Man erkennt auch wieder die skizzierte Matratze 24 und deren Beweglichkeit in der Höhenrichtung h.

Fig. 6 zeigt eine weitere Darstellung des Innenraums der Wohneinrichtung. Man erkennt auch hier die Matratze 24 mit der Ausnehmung 24a. Wie oben erwähnt, kann hier eine einzige Matratze mit einer Ausnehmung vorgesehen sein oder zwei Matratzen, welche jeweils an ihren Seiten Ausnehmungen aufweisen und welche gemeinsam die Ausnehmung 24a ausbilden.

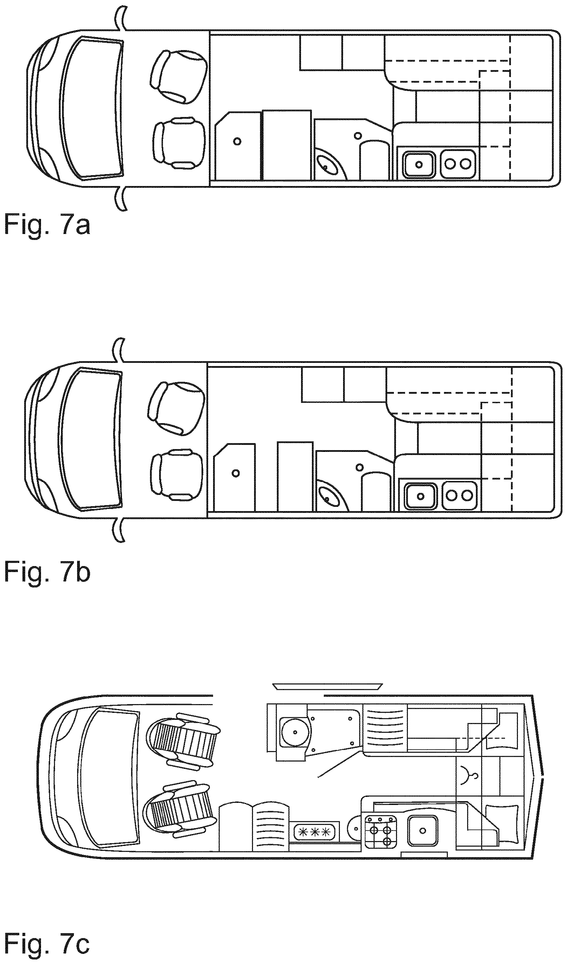

Die Fig. 7a - 7c zeigen drei Darstellungen von möglichen Ausgestaltungen einer mobilen Wohneinrichtung. Man erkennt hier, dass die Breite der Wohneinrichtung 197cm beträgt und die Gesamtlänge unter 4,50m liegt. Damit kann die Wohneinrichtung noch auf Parkflächen für PKWs abgestellt werden.

Die Länge der Liegeeinrichtung kann je nach Ausführungsform leicht unterschiedlich sein, etwa zwischen 182 und 200 liegen. Die Gesamtlänge des Fahrzeugs kann auch höher sein, und beispielsweise bei 6m liegen.

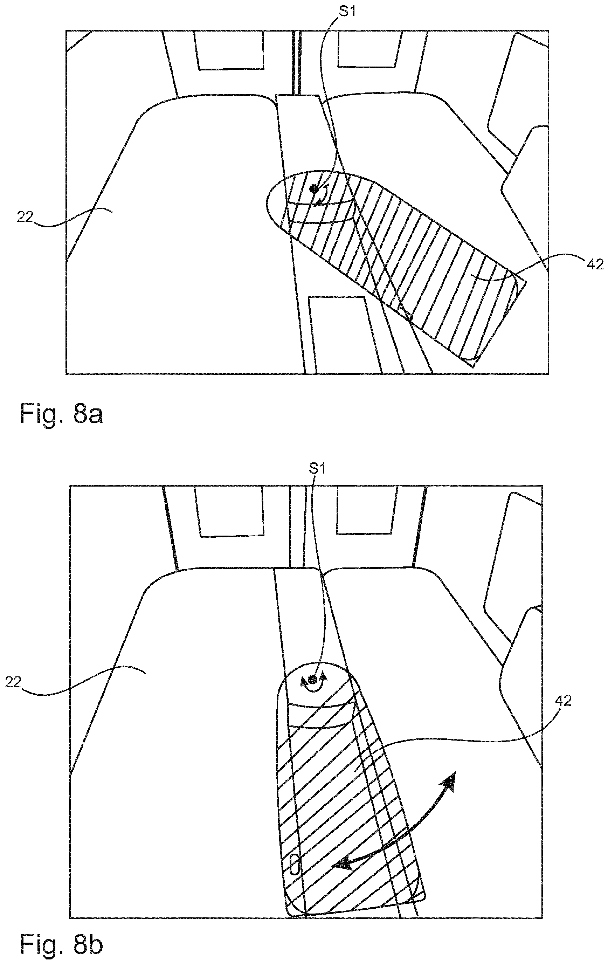

Die Fig. 8a und 8b zeigen eine weitere Ausführungsform der vorliegenden Erfindung. Hier ist zusätzlich ein Abdeckelement 42 vorgesehen, welches zwischen zwei in den Figuren 8a und 8b gezeigten Positionen schwenkbar ist.

In beiden Figuren ist die Matratze und das Gestell in einer Gebrauchsstellung gezeigt. In der in Fig. 8a gezeigten Situation ist das Abdeckelement derart geschwenkt, dass die Ausnehmung der Matratze nicht oder nur teilweise abgedeckt ist, so dass der Blick auf eine Dachluke des Fahrzeugs freigegeben ist.

In der in Fig. 8b gezeigten Situation ist das Abdeckelement bzw. die Abdeckeinrichtung derart geschwenkt, dass die in der Matratze gebildete Ausnehmung verdeckt ist. Diese Schwenkstellung des Abdeckelements eignet sich insbesondere für die Schlafposition der Matratze.

Bevorzugt ist das Abdeckelement als plattenartiger Körper ausgebildet und besonders bevorzugt ist das Abdeckelement aus einem leichten Material wie insbesondere einem Kunststoff hergestellt.

Das Bezugszeichen S1 kennzeichnet, eine Schwenkachse, bezüglich derer das Abdeckelement schwenkbar ist.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Bewegliche Wohneinrichtung (1), insbesondere Kastenwagen mit einem Aufenthaltsraum (10) und wenigstens einer innerhalb dieses Aufenthaltsraums (10) angeordneten Zubereitungseinheit (12) für Speisen und mit wenigstens einer innerhalb des Aufenthaltsraums angeordneten Liegeeinrichtung (2), wobei diese Liegeeinrichtung in einer vorgegebenen linearen Richtung zwischen einer Liegeposition, in welcher sie für einen Benutzer als Liegefläche dient und einer weiteren Position bewegbar ist, wobei die Liegeeinrichtung in der Liegeposition in einer vertikalen Richtung niedriger angeordnet ist als in der weiteren Position und wobei die Wohneinrichtung wenigstens eine Antriebseinrichtung aufweist, welche dazu geeignet und bestimmt ist die Liegeeinrichtung von der Liegeposition in die weitere Position zu bewegen,
**dadurch gekennzeichnet, dass**
die Liegeeinrichtung ein Gestell (22) und eine Matratze (24) aufweist, und wenigstens vier in der vertikalen Richtung bewegliche Halteeinrichtungen, an denen das Gestell in einer vertikalen Richtung beweglich angeordnet ist.

2. Vorrichtung nach Anspruch 1,
**dadurch gekennzeichnet, dass**
die Wohneinrichtung wenigstens vier Führungseinrichtungen (26) aufweist, an denen die Halteeinrichtungen in der vertikalen Richtung verschieblich angeordnet sind.

3. Vorrichtung nach wenigstens einem der vorangegangenen Ansprüche,
**dadurch gekennzeichnet, dass**
wenigstens zwei Antriebseinrichtungen zum Bewegen des Gestells (22) vorgesehen sind.

4. Vorrichtung nach wenigstens einem der vorangegangenen Ansprüche,
**dadurch gekennzeichnet, dass**
die Wohneinrichtung wenigstens eine Abstützeinrichtung aufweist, welche das Gestell und/oder die Liegeeinrichtung in der Liegeposition abstützt, wobei die Abstützung bevorzugt in der vertikalen Richtung unflexibel ist.

5. Vorrichtung nach wenigstens einem der vorangegangenen Ansprüche,
**dadurch gekennzeichnet, dass**
an einer Unterseite des Gestells Schonelemente angeordnet sind, welche bei einem Aufliegen des Gestells auf der Abstützeinrichtung diese schonen.

6. Vorrichtung nach wenigstens einem der vorangegangenen Ansprüche,
**dadurch gekennzeichnet, dass**
die Abstützeinrichtung ein Abstützelement aufweist, welches zwischen einer ersten Position, in welcher es zum Abstützen des Gestells geeignet und bestimmt ist, und einer zweiten Position, in welcher es nicht zum Abstützen des Gestells geeignet und bestimmt ist, bewegbar ist.

7. Vorrichtung nach wenigstens einem der vorangegangenen Ansprüche,
**dadurch gekennzeichnet, dass**
die Matratze eine Oberseite aufweist, welche als Liegefläche dient, sowie eine Unterseite, welche dieser Oberseite gegenüber liegt und dass die Matratze wenigstens und bevorzugt genau fünf Eckbereiche aufweist, welche insbesondere ein unregelmäßiges Fünfeck ausbilden, welches geometrisch durch Beschneiden eines Rechtecks in einem Eckbereich entsteht oder die Matratze vier Eckbereiche aufweist, welche ein Rechteck ausbilden und wobei die Matratze eine Ausnehmung aufweist, welche von der Oberseite zu der Unterseite reicht.

8. Vorrichtung nach dem vorangegangenen Anspruch,
**dadurch gekennzeichnet, dass**
die Vorrichtung ein Abdeckelement (42) aufweist, die zwischen einer ersten Position und einer zweiten Position bewegbar und insbesondere schwenkbar ist, wobei die Abdeckeinrichtung in der ersten Position die Ausnehmung wenigstens teilweise abdeckt.

9. Vorrichtung nach dem vorangegangenen Anspruch,
**dadurch gekennzeichnet, dass**
das Gestell an die Gestalt der wenigstens einen Matratze angepasst ist.

10. Matratze, insbesondere für Kastenwägen und dergleichen, wobei die Matratze vier Eckbereiche aufweist, welche ein Rechteck ausbilden und wobei die Matratze eine Oberseite aufweist, welche als Liegefläche dient, sowie eine Unterseite, welche dieser Oberseite gegenüber liegt, wobei die Matratze eine Ausnehmung aufweist, welche von der Oberseite zu der Unterseite reicht.
